# EUROPÄISCHE PATENTANMELDUNG

(11) **EP 3 915 905 A1**
(43) Veröffentlichungstag der Anmeldung: **01.12.2021**
(21) Anmeldenummer: 20177298.5
(22) Anmeldetag: 29.05.2020
(51) Int. Cl.: B65G 19/14, B65G 23/14, B65G 45/26, B65G 21/08, B65G 23/22

(54) **ANTRIEBSSTATION**

(71) Anmelder: Bühler AG, 9240 Uzwil (CH)
(72) Erfinder: HUBER, Markus, 93155 Hemau (DE)
(74) Vertreter: Vossius & Partner Patentanwälte Rechtsanwälte mbB

(57) **Zusammenfassung**

Die vorliegende Erfindung umfasst eine Antriebsstation für eine Vorrichtung zum Fördern von Schüttgut, wobei die Antriebsstation aufweist: ein Gehäuse mit einer Bodenplatte und Seitenwänden, wobei zumindest in einer Seitenwand mindestens eine Öffnung zum Durchgang eines Fördermittels zum Fördern des Schüttguts entlang eines Durchgangswegs aufweist, und einen Antrieb zum Bewegen des Fördermittels, wobei der Antrieb in dem Gehäuse angeordnet ist. In vertikaler Richtung unterhalb des Durchgangswegs und über der Bodenplatte ist ein bevorzugt bewegbarer Zwischenboden angeordnet, der Öffnungen aufweist.

## Beschreibung

Die vorliegende Offenbarung bezieht sich auf eine Antriebsstation für eine Vorrichtung zum Fördern von Schüttgut sowie ein Verfahren zum Entfernen von Schüttgut aus einer Antriebsstation.

Beim Transport von Schüttgütern mittels Förderbänder, Eimer-, Becher-, Schubmittelförderer oder ähnlicher Vorrichtungen kann es im Betrieb zu Ablagerungen von Produkt oder Produktresten in Teilen der Anlage, insbesondere in der Antriebsstation der Anlage kommen. Besonders bei Gütern für die Lebensmittelproduktion oder anderen Gütern, die hohe Anforderungen an die Reinheit haben, ist eine Kontamination des Produkts mit Rückständen, die aus der Anlage oder Antriebsstation zurück in den Produktkreislauf gelangen, zu vermeiden. Daher muss die Antriebsstation in regelmäßigen Abständen gereinigt werden, um einen Rückfluss von kontaminiertem Produkt zu verhindern. Hierzu muss in vielen Fällen die Anlage gestoppt und die Antriebsstation von Fachpersonal geöffnet und gereinigt werden.

Die US 4 257 518 A offenbart eine Förderbandanlage mit einem Kratzer, um das Förderband zu reinigen sowie einem Förderer zum Entfernen von Rückständen im Gehäuse. Die EP 2 121 490 A2 bedient sich Bürsten, um die Fördermittel eines pneumatischen Förderers zu reinigen. Die CN 102 818 272 A offenbart ein Förderband mit daran angebrachten Bürsten, die Rückstände im Gehäuse zu einem Staubauslass transportieren.

Aufgabe der vorliegenden Offenbarung ist es daher, eine Antriebsstation bereitzustellen, die im Betrieb und ohne spezifische Kenntnisse zuverlässig gereinigt werden kann.

Dies wird durch die Merkmale der unabhängigen Ansprüche, die die Erfindung definieren, gelöst. Abhängige Ansprüche beschreiben bevorzugte Ausführungsformen.

Die vorliegende Erfindung umfasst eine Antriebsstation für eine Vorrichtung zum Fördern von Schüttgut, wobei die Antriebsstation aufweist: ein Gehäuse mit einer Bodenplatte und Seitenwänden, wobei zumindest in einer Seitenwand mindestens eine Öffnung zum Durchgang eines Fördermittels zum Fördern des Schüttguts entlang eines Durchgangswegs aufweist, und einen Antrieb zum Bewegen des Fördermittels, wobei der Antrieb in dem Gehäuse angeordnet ist. In vertikaler Richtung unterhalb des Durchgangswegs und über der Bodenplatte ist ein Zwischenboden angeordnet, der Öffnungen aufweist. Der Zwischenboden kann bewegbar, insbesondere horizontal oder auch in einem Winkel schräg zur Bodenplatte bewegbar sein.

Der Zwischenboden kann einen Rost aufweisen. Unterhalb des (bewegbaren) Zwischenbodens kann zusätzlich ein stationärer Zwischenboden angebracht sein, der ebenfalls Öffnungen aufweist. Bevorzugt fluchten durch eine Bewegung des Zwischenbodens die Öffnungen der Böden wahlweise oder sind versetzt zueinander angeordnet.

Der bewegbare Zwischenboden kann mittels eines Antriebs, insbesondere eines Motors oder auch zum Beispiel eines pneumatischen Antriebs oder anderen Antriebs bewegt werden. Der bewegbare Zwischenboden kann mittels eines außen am Gehäuse angebrachten Hebels oder Griffs verschoben werden.

Unterhalb des bewegbaren Zwischenbodens kann ein Raum ausgebildet sein, wobei in dem Raum bevorzugt mindestens ein Auffangbehälter, insbesondere eine Schublade angeordnet ist.

Bevorzugt ist der Auffangbehälter entlang von Führungen verschiebbar und aus dem Gehäuse entnehmbar.

Die Öffnungen des bewegbaren Zwischenbodens und/oder des stationären Zwischenbodens sind bevorzugt rund, oval, länglich oder eckig ausgebildet.

Der Antrieb kann ein Ketten- oder ein Rollenantrieb, oder auch ein Schneckenantrieb, Riemenantrieb oder jede anderer Antriebsform sein.

Der Raum kann mittels einer abnehmbaren Abdeckung oder einer Klappe verschlossen sein.

Die Erfindung umfasst auch ein Verfahren zum Entfernen von Schüttgut aus einer Antriebsstation, vorzugsweise wie oben beschrieben, wobei das Verfahren das Bewegen eines mit Öffnungen versehenen bevorzugt bewegbaren Zwischenbodens in der Antriebsstation aufweist.

Bevorzugt werden beim Bewegen des Zwischenbodens Reste von Schüttgut, das durch eine durch die Antriebsstation angetriebenen Fördervorrichtung gefördert wird, die sich innerhalb der Antriebstation angesammelt haben, in einen unter dem Zwischenboden angeordneten Raum oder Auffangbehälter verbracht. Alternativ kann auch der Zwischenboden stationär sein und die Schüttgutreste durch Bewegen der Antriebsstation in den unter dem Zwischenboden angeordneten Raum verbracht werden. Weiterhin können durch Reinigen des Raums oder Herausziehen und Leeren der Schublade die Schüttgutreste aus der Antriebsstation entfernt werden. Das Verfahren und insbesondere die Reinigung des Raums bzw. das Herausziehen und Leeren der Schublade kann gemäß der Erfindung insbesondere während des Betriebs der Antriebsstation, also während des Betriebs der Fördervorrichtung durchgeführt werden, weil die Fördermittel und Antriebseinheit vom Zwischenboden abgeschirmt werden und der Bediener somit nicht hineingreifen kann.

Die Erfindung wird anhand der beigefügten Figuren beschrieben. Es zeigen:
- Fig. 1: eine Ansicht einer beispielhaften Antriebsstation gemäß einer Ausführungsform,
- Fig. 2: eine weitere Ansicht einer beispielhaften Antriebsstation gemäß einer Ausführungsform,
- Fig. 3: eine Außenansicht einer beispielhaften Antriebsstation gemäß einer Ausführungsform.

Die vorliegende Offenbarung kann in verschiedenen Anlagen zum Transport von Schüttgütern Anwendung finden. Hierzu gehören Schubelementförderer, Trogkettenförderer, Förderbänder, Elevatoren o. Ä. Allen Anlagen ist gemein, dass eine Antriebsstation notwendig ist, um die jeweiligen Fördermittel zu bewegen. Die Antriebsstation weist in der Regel ein Gehäuse mit einer Bodenplatte, Seitenwänden und einer Deckenplatte auf, welches mindestens eine Öffnung aufweist, durch die das Fördermittel in das Innere des Gehäuses geführt wird. Die Öffnung kann insbesondere in einer Seitenwand bzw. in zwei gegenüberliegenden der Seitenwände des Gehäuses vorgesehen sein. Im Gehäuse selbst ist ein Antrieb vorgesehen, der das Fördermittel bewegt. Im Betrieb kann es jedoch dazu kommen, dass Rückstände am Fördermittel oder auch Reste des zu fördernden Produkts in die Antriebsstation gelangen und sich dort ablagern. Ferner kann es auch zu Metallabrieb oder anderen Verschleißerscheinungen kommen, wobei sich Rückstände in der Antriebsstation ablagern können. Dies kann sowohl den Betrieb des Antriebs beeinträchtigen also auch zu einer Kontamination des Produkts durch eine Rückführung der Ablagerungen in den Produktkreislauf führen. Insbesondere bei Produkten mit hohen Hygieneanforderungen, beispielsweise in der Lebensmittelproduktion, muss dies vermieden werden. Da sich in der Antriebsstation im Betrieb bewegliche Teile befinden und auch die Reinigung zu einer ungewollten Kontamination des Produkts führen kann, muss in herkömmlichen Anlagen der Antrieb gestoppt werden und das Schadprodukt bzw. die Produktablagerungen bzw. Schüttgutreste müssen beispielsweise durch einen Staubsauger aus der Antriebsstation entfernt werden.

Um dies zu verhindern ist erfindungsgemäß in der Antriebsstation ein bevorzugt beweglicher Zwischenboden vorgesehen, der sich unter dem Antrieb befindet. Mitgeschlepptes Produkt oder Ablagerungen, auch Schadprodukt genannt, fallen in der Antriebsstation nach unten auf den Zwischenboden. Der Zwischenboden weist ferner Öffnungen auf, sodass das Schadprodukt in einen Raum unterhalb des Zwischenbodens fällt. Durch eine Bewegung in horizontaler, vertikaler Richtung und/oder einer um einen Winkel gegen die Bodenplatte geneigter Richtung kann auch auf dem Zwischenboden verbliebenes Schadprodukt nach unten befördert werden. Dies kann insbesondere eine Rüttelbewegung, Schwingbewegung oder eine Vibrobewegung sein. Der Raum unterhalb des Zwischenbodens ist beispielsweise durch eine Klappe von außen zugänglich und kann folglich ohne Stillstand der Maschine ausgesaugt oder gereinigt werden. Es können auch Auffangbehälter, wie beispielsweise Schubladen oder Säcke vorgesehen sein, die entnommen und entleert werden können. Eine Entleerung kann auch automatisiert durchgeführt werden. Ferner kann ein starrer Boden unterhalb des beweglichen Zwischenbodens vorgesehen sein, der Öffnungen in Entsprechung zum beweglichen Zwischenboden aufweist. Somit können durch Bewegung des beweglichen Zwischenbodens die Öffnungen wahlweise fluchten oder versetzt zueinander angeordnet sein.

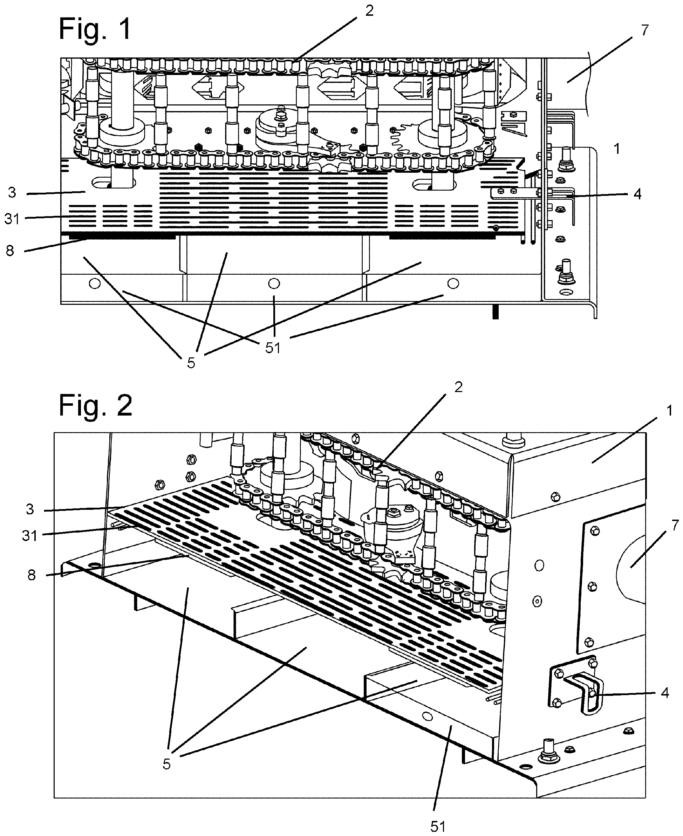

Figur 1 zeigt eine beispielhafte Anwendung der Erfindung in der Antriebsstation 1 eines Schubelementförderers. Wie bereits oben erwähnt ist die Erfindung nicht auf eine solche Antriebsstation beschränkt, sondern kann auch in anderen Antriebsstationen von Vorrichtungen zur Förderung von Schüttgut zum Einsatz kommen. Die Antriebsstation 1 ist durch ein Gehäuse definiert, wobei sich im Inneren des Gehäuses der Antrieb 2 befindet. Das Innere der Antriebsstation ist durch Ausblenden einer der Seitenwände sichtbar. Gemäß Figur 1 kommt hier ein Kettenantrieb als Antrieb 2 zum Einsatz, der die Schubelemente (nicht gezeigt) weiterbefördert. Befinden sich nun an den Schubelementen Produktablagerungen bzw. -reste, fallen diese, der Schwerkraft folgend, nach unten. Dort ist ein bewegbarer Zwischenboden 3 vorgesehen, der Öffnungen aufweist. Die Öffnungen können länglich, oval, eckig, rund oder in anderer Form ausgebildet sein. Der bevorzugt bewegbare Zwischenboden 3 kann horizontal und/oder vertikal bewegbar sein. Der bewegbare Zwischenboden 3 kann beispielsweise auch in einem bestimmten Winkel in Bezug auf die Horizontale bzw. schräg zur Bodenplatte bewegbar sein. Dies kann beispielsweise durch Auflageelemente im Inneren der Antriebsstation, die die Bewegung des bewegbaren Zwischenbodens 3 nach unten begrenzen, bewerkstelligt werden. Alternativ können Schienen oder ähnliche Führungselemente und/oder Drehpunkte vorgesehen sein. Der Zwischenboden 3 kann beispielsweise mittels eines Hebels 4, der von außerhalb der Antriebsstation zugänglich ist, bewegt werden. Alternativ oder zusätzlich kann ein Antrieb vorgesehen sein, der den Zwischenboden 3 bewegt. Der Motor kann bspw. nach manueller Betätigung eines Schalters/Knopfes, durch eine Fernsteuerung über ein Netzwerk, in festen Intervallen o. Ä. aktiviert werden. Der bewegbare Zwischenboden kann auch als Rost ausgeführt sein.

Unterhalb des bewegbaren Zwischenbodens 3 ist ein Raum 5 in der Antriebsstation ausgebildet. In diesen Raum 5 fällt das abgelagerte Produkt durch die Öffnungen des bewegbaren Zwischenbodens 3, insbesondere bei Bewegung, z.B. Rütteln, des Zwischenbodens 3. Der Raum 5 kann von außen durch eine Öffnung zugänglich sein. Die Öffnung kann durch eine Klappe oder Abdeckung verschlossen und geöffnet werden. Es kann auch mindestens eine Schublade im Raum 5 vorgesehen sein, in welcher sich das Schadprodukt sammelt. Im Falle mehrerer Schubladen können ferner der Schubladenanzahl entsprechende Führungen, wie in Figur 1 gezeigt, vorgesehen sein. Somit kann das Schadprodukt ohne Beeinträchtigung der Produktion, d.h. bei weiterlaufender Anlage, aus dem Raum 5 entfernt werden.

Zusätzlich kann unterhalb des bewegbaren Zwischenbodens 3 ein stationärer Zwischenboden vorgesehen sein. Dieser stationäre Zwischenboden kann Öffnungen in Entsprechung zu denen des beweglichen Zwischenbodens aufweisen, so dass diese bei Bewegung wahlweise fluchten oder versetzt zueinander angeordnet sind.

Figur 2 zeigt eine Ansicht einer Antriebsstation 1 gemäß der vorliegenden Erfindung. Die Figur 2 entspricht im Wesentlichen dem in Figur 1 gezeigten Aufbau und zeigt die Antriebsstation in einer Schnittansicht, wobei ebenfalls durch Ausblenden einer Seitenwand eine Ansicht des Inneren der Antriebsstation perspektivisch gezeigt ist.

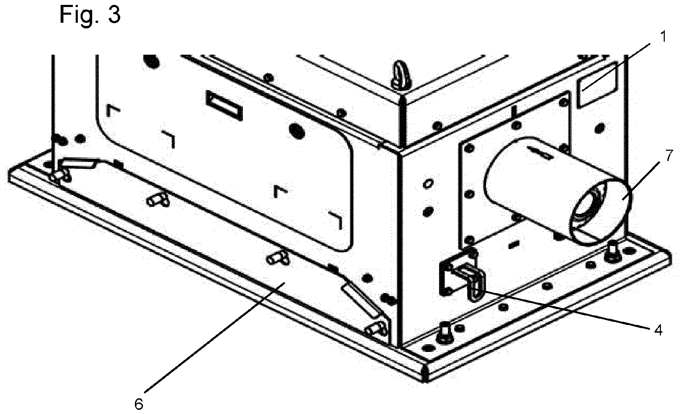

Figur 3 ist eine Außenansicht einer Antriebsstation 1 gemäß der vorliegenden Erfindung. Auch in diesem Fall wird eine Antriebsstation 1 eines Schubelementförderers gezeigt, dies ist jedoch nicht als einschränkend zu verstehen. Insbesondere sind in Figur 3 die Abdeckung 6 des Raums 5 bzw. des Schubladenfachs sowie die Öffnung für das Fördermittel 7 gezeigt.

Die vorliegende Erfindung umfasst auch ein Verfahren zum Entfernen von Schüttgut aus einer Antriebsstation, vorzugsweise gemäß der obigen Beschreibung, wobei das Verfahren das Bewegen eines mit Öffnungen versehenen bewegbaren Zwischenbodens in der Antriebsstation aufweist. Beim Bewegen des Zwischenbodens können Reste von Schüttgut, das durch eine durch die Antriebsstation angetriebenen Fördervorrichtung gefördert wird, die sich innerhalb der Antriebstation angesammelt haben, in einen unter dem Zwischenboden angeordneten Raum oder Auffangbehälter verbracht werden. Ferner können durch Reinigen des Raums oder Herausziehen und Leeren des Auffangbehälters die Schüttgutreste aus der Antriebsstation auch während deren Betriebs und damit während des Betriebs des durch diese angetriebenen Förderer entfernt werden.

Gemäß der vorliegenden Erfindung können Produktablagerungen oder Schadprodukt, die sich in der Antriebsstation abgelagert haben, während des Betriebs über die Abdeckung oder das Herausnehmen von Schubladen aus einem Raum unterhalb des Antriebs entfernt werden. Dabei ist ein bevorzugt bewegbarer Zwischenboden mit Öffnungen vorgesehen, der es erlaubt, dass Produktreste durchfallen, aber den Raum vom Antrieb selbst trennt. Durch Bewegen des Zwischenbodens können ferner zwischen den Öffnungen verbliebene Reste in den Raum unterhalb des Antriebs befördert werden. Somit besteht keine Gefahr für das Bedienpersonal und die Reinigung kann ohne Sicherheitsrisiko auch von ungelerntem Personal vollzogen werden.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Es versteht sich, dass Fachleute Änderungen und Abwandlungen machen können, ohne den Umfang der folgenden Ansprüche zu verlassen. Insbesondere umfasst die Erfindung ebenfalls Ausführungsformen mit jeglicher Kombination von Merkmalen, die vorstehend zu verschiedenen Aspekten und/oder Ausführungsformen genannt oder gezeigt sind.

Die Erfindung umfasst ebenfalls einzelne Merkmale in den Figuren auch wenn sie dort im Zusammenhang mit anderen Merkmalen gezeigt sind und/oder vorstehend nicht genannt sind. Im Weiteren schließt der Ausdruck "umfassen" und Ableitungen davon andere Elemente oder Schritte nicht aus. Ebenfalls schließt der unbestimmte Artikel "ein" bzw. "eine" und Ableitungen davon eine Vielzahl nicht aus. Die Funktionen mehrerer in den Ansprüchen aufgeführter Merkmale können durch eine Einheit erfüllt sein. Die Begriffe "im Wesentlichen", "etwa", "ungefähr" und dergleichen in Verbindung mit einer Eigenschaft beziehungsweise einem Wert definieren insbesondere auch genau die Eigenschaft beziehungsweise genau den Wert. Alle Bezugszeichen in den Ansprüchen sind nicht als den Umfang der Ansprüche einschränkend zu verstehen.

### Liste der Bezugszeichen

- 1: Antriebsstation
- 2: Antrieb
- 3: Bewegbarer Zwischenboden
- 31: Öffnungen des Zwischenbodens
- 4: Hebel/Griff
- 5: Raum/Raum für Auffangbehälter
- 51: Auffangbehälter
- 6: Abdeckung/Klappe
- 7: Öffnung für Fördermittel
- 8: Stationärer Zwischenboden

## Patentansprüche

1. Antriebsstation (1) für eine Vorrichtung zum Fördern von Schüttgut, wobei die Antriebsstation (1) aufweist:
ein Gehäuse mit einer Bodenplatte und Seitenwänden, wobei zumindest in einer Seitenwand mindestens eine Öffnung (7) zum Durchgang eines Fördermittels zum Fördern des Schüttguts entlang eines Durchgangswegs aufweist, und
einen Antrieb (2) zum Bewegen des Fördermittels, wobei der Antrieb (2) in dem Gehäuse angeordnet ist,
wobei in vertikaler Richtung unterhalb des Durchgangswegs und über der Bodenplatte ein Zwischenboden (3) angeordnet ist und wobei der Zwischenboden (3) Öffnungen (31) aufweist.

2. Antriebsstation (1) nach Anspruch 1, wobei der Zwischenboden (3) einen Rost aufweist.

3. Antriebsstation (1) nach Anspruch 1 oder 2, wobei der Zwischenboden (3) bewegbar ist.

4. Antriebsstation (1) nach Anspruch 3, wobei unterhalb des bewegbaren Zwischenbodens (3) ein stationärer Zwischenboden (8) angebracht ist und wobei der stationäre Zwischenboden (8) Öffnungen aufweist,
wobei durch die Bewegung des bewegbaren Zwischenbodens (3) die Öffnungen der Böden (3, 8) wahlweise fluchten oder versetzt zueinander angeordnet sind.

5. Antriebsstation (1) nach einem der Ansprüche 3 oder 4, wobei der bewegbare Zwischenboden (3) mittels eines Antriebs bewegt wird.

6. Antriebsstation (1) nach einem der Ansprüche 3 bis 5, wobei der bewegbare Zwischenboden (3) mittels eines außen am Gehäuse angebrachten Hebels oder Griffs (4) verschoben wird.

7. Antriebsstation (1) nach einem der vorstehenden Ansprüche, wobei unterhalb des Zwischenbodens (3) ein Raum (5) ausgebildet ist, wobei in dem Raum (5) bevorzugt mindestens ein Auffangbehälter (51), insbesondere eine Schublade angeordnet ist.

8. Antriebsstation (1) nach Anspruch 6, wobei der Auffangbehälter (51) bevorzugt entlang von Führungen verschiebbar und aus dem Gehäuse entnehmbar ist.

9. Antriebsstation (1) nach einem der vorstehenden Ansprüche, wobei die Öffnungen (31) des Zwischenbodens (3) und/oder des stationären Zwischenbodens rund, oval, länglich oder eckig ausgebildet sind.

10. Antriebsstation (1) nach einem der vorstehenden Ansprüche, wobei der Antrieb (2) ein Ketten- oder ein Rollenantrieb, Schneckenantrieb, Riemenantrieb oder jede andere Antriebsform ist.

11. Antriebsstation (1) nach einem der Ansprüche 7 bis 10, wobei der Raum (5) mittels einer abnehmbaren Abdeckung oder einer Klappe (6) verschlossen ist.

12. Verfahren zum Entfernen von Schüttgut aus einer Antriebsstation (1), vorzugsweise gemäß einem der vorstehenden Ansprüche, wobei das Verfahren das Bewegen eines mit Öffnungen (31) versehenen vorzugsweise bewegbaren Zwischenbodens (3) in der Antriebsstation (1) aufweist.

13. Verfahren nach Anspruch 12, wobei beim Bewegen des Zwischenbodens (3) Reste von Schüttgut, das durch eine durch die Antriebsstation (1) angetriebenen Fördervorrichtung gefördert wird, die sich innerhalb der Antriebstation angesammelt haben, in einen unter dem Zwischenboden (3) angeordneten Raum (5) oder Auffangbehälter (51) verbracht werden.

14. Verfahren nach Anspruch 13, wobei durch Reinigen des Raums (5) oder Herausziehen und Leeren des Auffangbehälters (51) die Schüttgutreste aus der Antriebsstation (1) entfernt werden.

15. Verfahren nach einem der Ansprüche 12 bis 14, wobei das Verfahren während des Betriebs der Antriebsstation (1) durchgeführt wird.
